# EUROPEAN PATENT APPLICATION

(11) **EP 4 670 494 A1**
(43) Date of publication of application: **31.12.2025**
(21) Application number: 24760249.3
(22) Date of filing: 15.02.2024
(51) Int. Cl.: A01G 22/05, A01G 7/00, A01G 31/00

(54) **TOMATO AND METHOD FOR CULTIVATING TOMATO PLANT**

(30) Priority: 24.02.2023 JP 2023027720
(71) Applicant: FUJIFILM Corporation, Tokyo 106-8620 (JP)
(72) Inventor: HATTORI, Akiko, Ashigarakami-gun, Kanagawa 258-8577 (JP); HOSOKAWA, Takafumi, Ashigarakami-gun, Kanagawa 258-8577 (JP)
(74) Representative: HGF
(86) International application number: PCT/JP2024/005351
(87) International publication number: WO 2024/176949

(57) **Abstract**

A tomato in which a lycopene content is 12 mg/100 g or more and less than 30 mg/100 g, and a proline content is 10 mg/100 g or more and less than 300 mg/100 g, and a cultivation method for a tomato plant body.

## Description

### BACKGROUND OF THE INVENTION

### 1. Field of the Invention

The present disclosure relates to a tomato and a cultivation method for a tomato plant body.

### 2. Description of the Related Art

Due to the increased health consciousness regarding food, the need for functional vegetables has been increasing. In recent years, high lycopene tomatoes having a higher lycopene content than conventional tomatoes are commercially available. However, the amount of lycopene in a high lycopene tomato generally available is about 6 mg/100 g, and to ingest the lycopene of 16 mg/day, which is an amount that can be expected to have a function of helping to protect the skin from ultraviolet stimulation, it is necessary to eat approximately 300 g of tomatoes per day.

In addition, to achieve 22 mg/day, which is the intake amount of lycopene that can be expected to have a function of reducing blood LDL cholesterol, it is necessary to eat a larger amount of tomatoes. For this reason, tomatoes having a higher lycopene content are desired.

For example, a high lycopene tomato is disclosed in US2009/0241209A and US2009/0064367A.

### SUMMARY OF THE INVENTION

In recent years, due to further increased health consciousness, interest has been increasing, as supplements are being sold for amino acids such as proline and arginine. Since tomatoes contain these amino acids in addition to lycopene, there is a demand for tomatoes that can be eaten deliciously and from which not only lycopene but also amino acids such as proline can be ingested in a well-balanced manner.

An object to be achieved by one embodiment of the present disclosure, made in view of the above demands, is to provide a tomato having a high nutritional value, which contains lycopene at a high concentration and contains a large amount of at least one of proline or arginine, and a cultivation method for a tomato plant body from which the tomato can be harvested.

Means for solving the above issues include the following aspects.
<1> A tomato in which a lycopene content is 12 mg/100 g or more and less than 30 mg/100 g, and a proline content is 10 mg/100 g or more and less than 300 mg/100 g.
<2> A tomato in which a lycopene content is 12 mg/100 g or more and less than 30 mg/100 g, and an arginine content is 10 mg/100 g or more and less than 100 mg/100 g.
<3> A tomato in which a lycopene content is 12 mg/100 g or more and less than 30 mg/100 g, a proline content is 10 mg/100 g or more and less than 300 mg/100 g, and an arginine content is 10 mg/100 g or more and less than 100 mg/100 g.
<4> A cultivation method for a tomato plant body, comprising:
   cultivating a tomato plant body by irradiation with artificial light in a temperature environment of lower than 30°C, and
   wherein the cultivation is performed by using a nutrient solution containing sodium chloride in a period at least from a time point of beginning of flowering of a second fruit cluster to before pinching.
<5> The cultivation method for a tomato plant body according to <4>, in which a content of the sodium chloride with respect to a total mass of the nutrient solution is 0.01% by mass to 1% by mass.
<6> The cultivation method for a tomato plant body according to <4> or <5>, in which a lycopene content in a tomato harvested is 12 mg/100 g or more.
<7> The cultivation method for a tomato plant body according to any one of <4> to <6>, in which the cultivation is performed by using a nutrient solution that does not contain nitrogen or that contains nitrogen and has a content of the nitrogen of 1% by mass or less with respect to a total mass of the nutrient solution, in a period after fruit setting.

According to one embodiment of the present disclosure, it is possible to provide a tomato having a high nutritional value, which further contains lycopene at a high concentration and contains a large amount of at least one of proline or arginine, and a cultivation method for a tomato plant body from which the tomato fruit can be harvested.

### DESCRIPTION OF THE PREFERRED EMBODIMENTS

Hereinafter, embodiments for performing the present disclosure are described in detail. However, the present disclosure is not limited to the following embodiments. In the following embodiments, the components (including elements, steps, and the like) are not essential unless otherwise specified. The same applies to numerical values and ranges thereof, which do not limit the present disclosure.

In the present disclosure, a numerical range represented using "to" includes numerical values before and after "to" as a minimum value and a maximum value, respectively.

In a numerical range described in a stepwise manner in the present disclosure, an upper limit or a lower limit described in one numerical range may be replaced with an upper limit or a lower limit in another numerical range described in a stepwise manner. In addition, in a numerical range described in the present disclosure, an upper limit value or a lower limit value described in the numerical range may be replaced with a value described in an example.

In the present disclosure, "mass" and "weight" are synonymous.

In the present disclosure, the "tomato plant body" is used to include a state of a tomato seed, a seedling raised from the tomato seed before planting, a tomato plant in a state of being cultivated by planting, and a tomato plant in a state in which a tomato cultivated by planting is harvested.

In the present disclosure, the term "step" includes not only an independent step but also a step as long as a desired purpose of the step is achieved even in a case where the step cannot be clearly distinguished from other steps.

In the present disclosure, the lycopene content, proline content, and arginine content in tomatoes are each measured according to the method described in Examples.

### [Tomato according to first aspect]

The tomato according to the first aspect has a lycopene content of 12 mg/100 g or more and less than 30 mg/100 g, and a proline content of 10 mg/100 g or more and less than 300 mg/100 g.

In the tomato according to the first aspect, from the viewpoint of nutritional value, the lycopene content is preferably 13 mg/100 g to 25 mg/100 g, more preferably 13 mg/100 g to 23 mg/100 g, and still more preferably 13 mg/100 g to 20 mg/100 g.

From the viewpoints of sweetness of tomato and nutritional value, in the tomato according to the first aspect, the proline content is preferably 13 mg/100 g or more, more preferably 15 mg/100 g or more, and still more preferably 20 mg/100 g or more. The proline content in the tomato according to the first aspect is less than 300 mg/100 g, and the upper limit of the proline content may be 200 mg/100 g or less or 100 mg/100 g or less.

The tomato according to the first aspect may contain arginine.

In a case where the tomato according to the first aspect contains arginine, from the viewpoints of sweetness of the tomato and nutritional value, an arginine content in the tomato according to the first aspect is preferably 10 mg/100 g or more and less than 100 mg/100 g, more preferably 15 mg/100 g to 95 mg/100 g, and still more preferably 18 mg/100 g to 85 mg/100 g.

### [Tomato according to second aspect]

The tomato according to the second aspect has a lycopene content of 12 mg/100 g or more and less than 30 mg/100 g, and an arginine content of 10 mg/100 g or more and less than 100 mg/100 g.

In the tomato according to the second aspect, from the viewpoint of nutritional value, the lycopene content is preferably 13 mg/100 g to 25 mg/100 g, more preferably 13 mg/100 g to 23 mg/100 g, and still more preferably 13 mg/100 g to 20 mg/100 g.

In the tomato according to the second aspect, from the viewpoints of sweetness of the tomato and nutritional value, the arginine content is preferably 15 mg/100 g to 95 mg/100 g, and more preferably 30 mg/100 g to 95 mg/100 g.

The tomato according to the second aspect may contain proline.

In a case where the tomato according to the second aspect contains proline, from the viewpoints of sweetness of the tomato and nutritional value, in the tomato according to the second aspect, a proline content is preferably 10 mg/100 g or more, more preferably 13 mg/100 g or more, still more preferably 15 mg/100 g or more, and particularly preferably 20 mg/100 g or more. The upper limit of the proline content may be less than 300 mg/100 g, 200 mg/100 g or less, or 100 mg/100 g or less.

### [Tomato according to third aspect]

The tomato according to the third aspect has a lycopene content of 12 mg/100 g or more and less than 30 mg/100 g, a proline content of 10 mg/100 g or more and less than 300 mg/100 g, and an arginine content of 10 mg/100 g or more and less than 100 mg/100 g.

In the tomato according to the third aspect, from the viewpoint of nutritional value, the lycopene content is preferably 13 mg/100 g to 25 mg/100 g, more preferably 13 mg/100 g to 23 mg/100 g, and still more preferably 13 mg/100 g to 20 mg/100 g.

The proline content in the tomato according to the third aspect is less than 300 mg/100 g, and may be 200 mg/100 g or less or 100 mg/100 g or less. The lower limit of the proline content is 10 mg/100 g, preferably 13 mg/100 g or more, more preferably 15 mg/100 g or more, and still more preferably 20 mg/100 g or more.

In the tomato according to the third aspect, from the viewpoint of sweetness and nutritional value of tomatoes, the arginine content is preferably 15 mg/100 g to 95 mg/100 g, and more preferably 18 mg/100 g to 85 mg/100 g.

The tomato according to the first aspect to the third aspect described above can be cultivated by a cultivation method for a tomato plant body described later. A method of adjusting the content of components such as lycopene, proline, and arginine contained in a tomato will be described later.

### (Cultivation method for tomato plant body)

In the cultivation method for a tomato plant body of the present disclosure, the tomato plant body is cultivated by irradiating the tomato plant body with artificial light in a temperature environment of lower than 30°C. Hereinafter, the cultivation method for a tomato plant body of the present disclosure may be referred to as "cultivation method of the present disclosure".

In the cultivation method of the present disclosure, during the cultivation period, the cultivation is performed using a nutrient solution containing sodium chloride (hereinafter, also referred to as a "specific nutrient solution") in a period at least from a time point of beginning of flowering of the second fruit cluster to before pinching. Accordingly, it is presumed that tomatoes having a high lycopene content can be stably harvested.

The reason for the increase in the lycopene content in tomatoes is presumed as follows.

By performing cultivation of a tomato plant body using artificial light in a temperature environment of lower than 30°C, the generation of lycopene in tomatoes harvested is promoted, and by further selectively incorporating sodium chloride into a nutrient solution during a period from a time point of beginning of flowering of the second fruit cluster to before pinching, generation of the lycopene is enhanced in tomatoes.

In addition, during the cultivation period, in a period after fruit setting of the tomato plant body, it is preferable to perform the cultivation using a nutrient solution in which nitrogen is not contained or a nutrient solution in which the content of nitrogen with respect to the total mass of the nutrient solution is 1% by mass or less. Accordingly, since it is possible to apply an appropriate stress to the tomato plant body, the tomato containing at least one of proline or arginine can be harvested. The tomato of the present disclosure preferably contains lycopene at a high concentration, and proline, and more preferably contains lycopene and proline at a high concentration and contains arginine.

The cultivation method for a tomato plant body of the present disclosure preferably includes a seedling raising step, a cultivation step, and a germination step, and may further include other steps as necessary.

### (Seedling raising step)

The cultivation method for a tomato plant body of the present disclosure can include a seedling raising step. In the seedling raising step, a plant body after germination is raised as a tomato plant seedling.

The seedling raising method is not particularly limited as long as it is performed using artificial light in a temperature environment of lower than 30°C, and the seedling raising can be performed by a method known in the related art.

Since the cultivation after fruit setting is performed by a hydroponic method using a specific nutrient solution, from the viewpoint of cultivation efficiency, the seedling raising step is preferably performed by the hydroponic method. The hydroponic method may be a Nutrient Film Technique hydroponic method or a Deep Flow Technique hydroponic method. From the viewpoint of growth rate, it is preferable to perform the cultivation by the Deep Flow Technique hydroponic method.

In the seedling raising step, the temperature condition can be adjusted by artificial light with which the plant body after germination is irradiated. The temperature conditions in the seedling raising step can be adjusted to, for example, two or more temperature conditions of the light period temperature and the dark period temperature. The means for irradiating with artificial light will be hereinafter also referred to as a light source.

In the present disclosure, the "light period" means a period during which the tomato plant body is subjected to irradiation by the light source. In addition, the "dark period" means a period in which the tomato plant body is not subjected to irradiation by the light source.

The seedling raising method is performed in a temperature environment of lower than 30°C, and from the viewpoint of improving the lycopene content, the upper limit of the light period temperature is preferably 29°C or lower, more preferably 28.5°C or lower, and still more preferably 28°C or lower. From the viewpoint of shortening the period until budding, the lower limit of the light period temperature is preferably 15°C or higher, more preferably 20°C or higher, and still more preferably 25°C or higher.

From the viewpoint of improving the lycopene content, the upper limit of the dark period temperature is preferably 25°C or lower, more preferably 23°C or lower, and still more preferably 22°C or lower. From the viewpoint of shortening the period until budding, the lower limit of the dark period temperature is preferably 10°C or higher, more preferably 13°C or higher, and still more preferably 15°C or higher.

The light period temperature and the dark period temperature are values measured by placing a thermometer at a position 1 cm away from the tomato plant body. As the thermometer, for example, a temperature/humidity sensor THA-3151 manufactured by T&D Corporation can be used.

A method of controlling the light period temperature and the dark period temperature is not particularly limited and the light period temperature and the dark period temperature can be controlled by using a known method in the related art. For example, the controlling of the light period temperature and the dark period temperature can be performed by monitoring the light period temperature and the dark period temperature of the seedling raising environment with the above-described thermometer, and sending hot air or cold air as necessary.

A light source for the artificial light is not particularly limited, and examples thereof include semiconductor light sources such as a light emitting diode (LED), discharge lamps such as a fluorescent lamp, and the like. In the cultivation method for a tomato plant body according to the present disclosure, an LED is preferably used.

One type of LED may be used, or two or more types of LEDs may be used.

The LED may emit visible light such as red, blue, and yellow, or may emit invisible light such as ultraviolet light (wavelength of 380 nm or less) or infrared light (wavelength of 780 nm or more). From the viewpoint of promoting photosynthesis of the tomato plant body, an LED that emits light in a wavelength range of 400 nm to 700 nm is preferable.

From the viewpoint of shortening the period until budding, the relative humidity in the seedling raising step is preferably controlled within a range of 50% to 80%, and more preferably controlled within a range of 55% to 77%.

The relative humidity is a value measured by placing a hygrometer at a position 1 cm away from the tomato plant body. As the hygrometer, for example, a temperature/humidity sensor THA-3151 manufactured by T&D Corporation can be used.

A method of controlling the humidity is not particularly limited, and the humidity can be controlled by a known method in the related art. For example, the humidity condition can be controlled by monitoring the humidity of the seedling raising environment with the above hygrometer and, as necessary, using an air conditioning device having a humidifying function and a dehumidifying function.

In the seedling raising step, from the viewpoint of shortening the period until budding, the intensity of the artificial light irradiated onto the plant body after germination is preferably 80 µmol/m²/s to 500 µmol/m²/s, and more preferably 100 µmol/m²/s to 300 µmol/m²/s.

The measured intensity of light is a value by placing a light-receiving surface of a measuring instrument at a position 1 cm away from the tomato plant body toward the light source. As the measuring instrument, for example, a photon sensor (LI-190R, manufactured by LI-COR, Inc.) and the like can be used. In a case where the light sources are disposed in two or more directions from the plant body after germination, the total intensity of light measured by disposing the measuring instrument toward respective light sources is defined as the light intensity.

The intensity of light can be controlled by a method for changing a type, the number, or the like of the light source (LED, fluorescent lamp, or the like) used, a method for changing the distance between the light source and the plant body after germination, a method for using a dimmable light source, or the like.

The irradiation with artificial light may be performed from the upper surface direction of the plant body after germination or from the side surface direction thereof, but from the viewpoints of cultivation efficiency, space utilization efficiency, and the like, it is preferable to perform the irradiation from the side surface direction.

The irradiation with the artificial light may be performed from both the side surface direction and the upper surface direction.

In the seedling raising step, from the viewpoint of shortening the period until budding, the carbon dioxide concentration in the environment is preferably 300 ppm to 2,000 ppm, and more preferably 400 ppm to 1,500 ppm.

The carbon dioxide concentration is a value measured by placing a carbon dioxide meter at a position 1 cm away from the tomato plant body. As the carbon dioxide meter, for example, LI-850 manufactured by LI-COR, Inc. can be used.

The method of controlling the carbon dioxide concentration is not particularly limited, and the carbon dioxide concentration can be controlled by a known method in the related art. For example, the carbon dioxide concentration can be controlled by monitoring the carbon dioxide concentration in the environment with the above-described carbon dioxide meter and using an air conditioning device or the like, as necessary.

In a case where the seedling raising step is performed by the hydroponic method, the dissolved oxygen concentration of the nutrient solution is preferably 3.5 mg/l or more, more preferably 4.5 mg/l or more, and still more preferably 6.0 mg/l or more. By setting the dissolved oxygen concentration of the nutrient solution within the above-described numerical range, the growth of the plant body after germination is more vigorous, and the period until budding can be shortened.

The upper limit value of the dissolved oxygen concentration of the nutrient solution is not particularly limited. The higher it is, the more preferable it is, and it is preferable to set it to a saturated concentration at the temperature of the nutrient solution to be used. For example, at 1 atm, a saturated dissolved oxygen concentration of distilled water at 27°C is 7.87 mg/l.

In the present disclosure, the measurement of the dissolved oxygen concentration of the nutrient solution is performed in the nutrient solution at 27°C by using an oxygen concentration monitor device (for example, Seven2Go Pro manufactured by Mettler-Toledo International Inc.). The oxygen concentration monitor device can be placed and used in a nutrient solution tank in which the nutrient solution is accommodated.

The dissolved oxygen concentration of the nutrient solution can be adjusted by using an oxygen supply mechanism, adjusting the circulation rate of the nutrient solution, or the like.

From the viewpoint of shortening the period until budding, it is preferable to use a liquid fertilizer or the like containing a fertilizer element required for plant growth in the nutrient solution.

The liquid fertilizer to be used is not particularly limited, and for example, a commercially available mixed liquid fertilizer (OAT House 1 manufactured by OAT Agrio Co., Ltd., Hyponica liquid fertilizer manufactured by Kyowa Co., Ltd., or the like) may be used by dissolving or diluting to a desired concentration, and a straight fertilizer may be used in combination based on a known fertilizer composition such as the Enshi standard nutrient solution and Yamazaki nutrient solution.

As a concentration indicator of a nutrient solution, an electrical conductivity (EC) value is generally used. The EC value of the nutrient solution in the present invention is preferably 0.3 dS/m to 5.0 dS/m and more preferably 0.8 dS/m to 2.0 dS/m.

The EC value of the nutrient solution is measured in the nutrient solution at 27°C by using an electric conductivity meter (for example, HI98131 manufactured by Hanna Instruments).

The EC value of the nutrient solution can be adjusted, for example, by adding a liquid fertilizer or the like to the nutrient solution.

From the viewpoint of shortening the period until budding, the pH of the nutrient solution is preferably 3.5 to 8.0 and more preferably 4.5 to 7.0.

The measurement of pH of the nutrient solution is performed in the nutrient solution at 27°C by using a pH monitor device (for example, HI98131 manufactured by Hanna Instruments). The pH of the nutrient solution can be adjusted, for example, by adding hydrochloric acid, sodium hydroxide, or the like to the nutrient solution.

The period of the seedling raising step is not particularly limited, and from the viewpoints of growth potential after planting, shortening of the period until budding, and the like, the period is preferably 5 days to 40 days, more preferably 10 days to 35 days, still more preferably 12 days to 30 days, and particularly preferably 15 days to 33 days.

In general, in the period of the seedling raising step, the amount of nutrients and the like absorbed from the nutrient solution by the plant body after germination is not large, and the change in the components of the nutrient solution is small. However, it is preferable to perform appropriate replacement of the nutrient solution, addition of the liquid fertilizer, and the like as necessary, depending on the EC value, pH, and the like of the nutrient solution.

In a case where the seedling raising step is performed by the hydroponic method, the support for supporting the plant body after germination or the seedling after seedling raising is not particularly limited, and it preferably has a material having moderate water permeability and water retention, and is more preferably a support table provided with a urethane sponge, a phenol resin sponge, rock wool, or a water retention sheet.

### (Cultivation step)

The cultivation method for a tomato plant body of the present disclosure can include a cultivation step.

In the cultivation step, the tomato plant seedling obtained in the seedling raising step is planted and cultivated. The cultivation step is preferably performed by a hydroponic method. The plant body in the cultivation step refers to a tomato plant after planting.

The hydroponic method may be a Nutrient Film Technique hydroponic method or a Deep Flow Technique hydroponic method. From the viewpoint of the growth rate of the tomato plant, it is preferable to perform the cultivation by the Deep Flow Technique hydroponic method.

In a case of supporting the tomato plant, since the support for the support is the same as that in the seedling raising step, the description thereof will be omitted here.

In the cultivation step, during the cultivation period, the cultivation is performed using a nutrient solution containing sodium chloride in a period from a time point of beginning of flowering of the second fruit cluster of a tomato plant to before pinching. Accordingly, a tomato containing a high concentration of lycopene is obtained.

In a period after the time point of beginning of flowering of the second fruit cluster, from the viewpoints of further increasing the content of lycopene and increasing the content of proline, the content of sodium chloride with respect to the total mass of the nutrient solution is preferably 0.01% by mass to 1% by mass, more preferably 0.1% by mass to 0.7% by mass, still more preferably 0.2% by mass to 0.5% by mass, and particularly preferably 0.3% by mass to 0.4% by mass.

In a period from after planting to before flowering of the first fruit cluster, from the viewpoints of reducing the stress on the tomato plant immediately after planting and forming sufficient flower buds, it is preferable to use a nutrient solution containing no sodium chloride or a nutrient solution containing sodium chloride and having a content of sodium chloride of 1% by mass or less with respect to the total mass of the nutrient solution. In a period until before flowering of the first fruit cluster, from the same viewpoint, it is more preferable to use a nutrient solution containing no sodium chloride or a nutrient solution containing sodium chloride and having a content of sodium chloride of 0.1% by mass or less with respect to the total mass of the nutrient solution and still more preferable to use a nutrient solution containing no sodium chloride or a nutrient solution containing sodium chloride and having a content of sodium chloride of 0.01% by mass or less with respect to the total mass of the nutrient solution, and particularly preferable to use a nutrient solution containing no sodium chloride.

In the present disclosure, the content of sodium chloride in the nutrient solution is calculated from the amount of the reagent used for solution preparation.

In a case of the preparation of the solution, the conductivity of the nutrient solution after the addition of sodium chloride may be measured with an electrical conductivity meter (conductivity meter) as necessary, and it may be confirmed that the desired electrical conductivity is obtained. As the electrical conductivity meter, a compact electrical conductivity (conductivity) meter (for example, LAQUAtwin series EC-33B manufactured by HORIBA Advanced Techno, Co., Ltd.) can be used.

In a period from after planting the tomato plant seedling to before flowering of the first fruit cluster, it is preferable to use a nutrient solution containing no hydrochloric acid or a nutrient solution containing hydrochloric acid and having a content of hydrochloric acid of 1% by mass or less with respect to the total mass of the nutrient solution. In a period until before flowering of the first fruit cluster, it is more preferable to use a nutrient solution containing no hydrochloric acid or a nutrient solution containing hydrochloric acid and having a content of hydrochloric acid of 0.1% by mass or less with respect to the total mass of the nutrient solution, still more preferable to use a nutrient solution containing no hydrochloric acid or a nutrient solution containing hydrochloric acid and having a content of hydrochloric acid of 0.01% by mass or less with respect to the total mass of the nutrient solution, and particularly preferable to use a nutrient solution containing no hydrochloric acid.

In the present disclosure, the content of hydrochloric acid in the nutrient solution is calculated from the amount of the reagent used for solution preparation.

In a case of the preparation of the nutrient solution, the pH after the addition of hydrochloric acid may be measured at 28°C using a pH meter, as necessary. As the pH meter, for example, a waterproof portable pH meter AS700 manufactured by AS ONE Corporation can be used.

In a period after the time point of beginning of flowering of the first fruit cluster of the tomato plant, it is preferable to add hydrochloric acid to the nutrient solution. By adding hydrochloric acid to the nutrient solution, as described later, it is possible to suppress the precipitation of sodium silicate in a case where the nutrient solution contains sodium silicate.

In a period after planting of the tomato plant seedling to before flowering of the first fruit cluster, it is preferable that sodium silicate not be added to the nutrient solution. This is because the addition of sodium silicate causes sodium ions to be dissolved in the nutrient solution, which causes the tomato plant body to feel stress and make it difficult to form flower buds.

In a period from after planting to before flowering of the first fruit cluster, from the viewpoint of forming sufficient flower buds, it is preferable to use a nutrient solution containing no sodium silicate (Na₂SiO₃) or a nutrient solution containing sodium silicate and having a content of sodium silicate of 1% by mass or less with respect to the total mass of the nutrient solution. In addition, in a period before flowering of the first fruit cluster, it is more preferable to use a nutrient solution containing no sodium silicate or a nutrient solution containing sodium silicate and having a content of sodium silicate of 0.1% by mass or less with respect to the total mass of the nutrient solution and still more preferable to use a nutrient solution containing no sodium silicate or a nutrient solution containing sodium silicate and having a content of sodium silicate of 0.01% by mass or less with respect to the total mass of the nutrient solution, and particularly preferable to use a nutrient solution containing no sodium silicate.

In the present disclosure, the content of sodium silicate in the nutrient solution is calculated from the amount of the reagent used for solution preparation.

In a period from after planting of the tomato plant seedling to before flowering of the first fruit cluster, from the viewpoints of sufficiently producing leaves and increasing the amount of photosynthesis, it is preferable to use a nutrient solution containing sodium nitrate (NaNO₃) in which nitrogen necessary for producing leaves is contained and the content of sodium nitrate with respect to the total mass of the nutrient solution is preferably 0.005% by mass to 0.5% by mass, more preferably 0.01% by mass to 0.3% by mass, and still more preferably 0.01% by mass to 0.1% by mass.

In the period after fruit setting of the tomato plant, it is preferable to cultivate a tomato plant body using a nutrient solution which does not contain nitrogen, or contains nitrogen and has a content of nitrogen with respect to the total mass of the nutrient solution of 1% by mass or less.

From the viewpoints of containing proline and arginine and improving the content thereof, in a period after fruit setting, it is preferable to cultivate a tomato plant body using a nutrient solution that does not contain nitrogen, or contains nitrogen and has a nitrogen content of 0.1% by mass or less, it is more preferable to perform cultivation of a tomato plant body using a nutrient solution that does not contain nitrogen, or contains nitrogen and has a nitrogen content of 0.01% by mass or less, and it is still more preferable to perform cultivation of a tomato plant body using a nutrient solution that does not contain nitrogen.

In the present disclosure, it is preferable to prepare a solution using a reagent or the like to realize a desired concentration for each element. The nitrogen content in the nutrient solution is calculated from the amount of the added reagent or is obtained by calculating the nitrogen concentration after dilution from the nitrogen concentration disclosed by the manufacturer using a liquid fertilizer stock solution sold by the manufacturer.

The nitrogen content of the nutrient solution is measured using a nitrate ion meter (for example, a compact nitrate ion meter LAQUAtwin series NO3-11 manufactured by Horiba Advanced Techno Co., Ltd.). In addition, the measurement can also be performed using a soil testing set "Midori-kun" of Siemens Healthcare K.K.

In a period from flowering of the first fruit cluster of the tomato plant to before flowering of the second fruit cluster, from the viewpoints of reducing the salt stress and forming sufficient flower buds, it is preferable to use a nutrient solution containing no sodium chloride or a nutrient solution containing sodium chloride and having a content of sodium chloride of 1% by mass or less with respect to the total mass of the nutrient solution, more preferable to use a nutrient solution containing no sodium chloride or a nutrient solution containing sodium chloride and having a content of sodium chloride of 0.1% by mass or less with respect to the total mass of the nutrient solution, still more preferable to use a nutrient solution containing no sodium chloride or a nutrient solution containing sodium chloride and having a content of sodium chloride of 0.01% by mass or less with respect to the total mass of the nutrient solution, and particularly preferable to use a nutrient solution containing no sodium chloride.

In a period from after flowering of the first fruit cluster of the tomato plant to before flowering of the second fruit cluster, from the viewpoint of suppressing precipitation in a case where a silicate is added, it is preferable to use a nutrient solution containing hydrochloric acid, and the content of hydrochloric acid with respect to the total mass of the nutrient solution is preferably 0.05% by mass to 5% by mass, more preferably 0.1% by mass to 3% by mass, still more preferably 0.2% by mass to 1% by mass, and particularly preferably 0.3% by mass to 0.7% by mass.

In a period from after flowering of the first fruit cluster of the tomato plant to before flowering of the second fruit cluster, from the viewpoint of fruit enlargement, it is preferable to use a nutrient solution containing sodium silicate, and the content of sodium silicate with respect to the total mass of the nutrient solution is preferably 0.005% by mass to 1% by mass, more preferably 0.01% by mass to 0.5% by mass, still more preferably 0.03% by mass to 0.1% by mass, and particularly preferably 0.05% by mass to 0.09% by mass.

After the pinching of the tomato plant, from the viewpoint of improving the content of arginine, it is preferable to reduce the sodium nitrate (NaNO₃) in the nutrient solution, and the content of sodium nitrate with respect to the total mass of the nutrient solution is preferably 0% by mass to 0.03% by mass, more preferably 0% by mass to 0.02% by mass, and still more preferably 0.001% by mass to 0.01% by mass.

In a period from after flowering of the second fruit cluster of the tomato plant to before pinching, from the viewpoint of suppressing precipitation in a case where a silicate is added, it is preferable to use a nutrient solution containing hydrochloric acid, and the content of hydrochloric acid with respect to the total mass of the nutrient solution is preferably 0.05% by mass to 5% by mass, more preferably 0.1% by mass to 3% by mass, still more preferably 0.2% by mass to 1% by mass, and particularly preferably 0.3% by mass to 0.7% by mass.

In a period from after flowering of the second fruit cluster of the tomato plant to before pinching, from the viewpoint of fruit enlargement, it is preferable to use a nutrient solution containing sodium silicate, and the content of sodium silicate with respect to the total mass of the nutrient solution is preferably 0.005% by mass to 1% by mass, more preferably 0.01% by mass to 0.5% by mass, still more preferably 0.03% by mass to 0.1% by mass, and particularly preferably 0.05% by mass to 0.09% by mass.

In a period from after flowering of the second fruit cluster of the tomato plant to before pinching, from the viewpoint of sufficiently producing leaves and increasing the amount of photosynthesis, it is preferable to use a nutrient solution containing sodium nitrate (NaNO₃) and the content of sodium nitrate with respect to the total mass of the nutrient solution is preferably 0.005% by mass to 0.5% by mass, more preferably 0.01% by mass to 0.3% by mass, and still more preferably 0.02% by mass to 0.1% by mass.

After pinching of the tomato plant, it is preferable to use a nutrient solution containing no sodium chloride or a nutrient solution containing sodium chloride and having a content of sodium chloride of 1% by mass or less with respect to the total mass of the nutrient solution, more preferable to use a nutrient solution containing no sodium chloride or a nutrient solution containing sodium chloride and having a content of sodium chloride of 0.1% by mass or less with respect to the total mass of the nutrient solution, still more preferable to use a nutrient solution containing no sodium chloride or a nutrient solution containing sodium chloride and having a content of sodium chloride of 0.01% by mass or less with respect to the total mass of the nutrient solution, and particularly preferable to use a nutrient solution containing no sodium chloride.

After pinching of the tomato plant, from the viewpoint of suppressing precipitation in a case where a silicate is added, it is preferable to use a nutrient solution containing hydrochloric acid, and the content of hydrochloric acid with respect to the total mass of the nutrient solution is preferably 0.05% by mass to 5% by mass, more preferably 0.1% by mass to 3% by mass, still more preferably 0.2% by mass to 1% by mass, and particularly preferably 0.3% by mass to 0.7% by mass.

After pinching of the tomato plant, from the viewpoint of fruit enlargement, it is preferable to use a nutrient solution containing sodium silicate, and the content of sodium silicate with respect to the total mass of the nutrient solution is preferably 0.005% by mass to 1% by mass, more preferably 0.01% by mass to 0.5% by mass, still more preferably 0.03% by mass to 0.1% by mass, and particularly preferably 0.05% by mass to 0.09% by mass.

In a period from after flowering of the first fruit cluster of the tomato plant to before flowering of the second fruit cluster, from the viewpoint of sufficiently producing leaves and increasing the amount of photosynthesis, it is preferable to use a nutrient solution containing sodium nitrate (NaNO₃) and the content of sodium nitrate with respect to the total mass of the nutrient solution is preferably 0.005% by mass to 0.5% by mass, more preferably 0.01% by mass to 0.3% by mass, and still more preferably 0.02% by mass to 0.1% by mass.

After pinching of the tomato plant, from the viewpoint of maintaining healthy leaves, it is preferable to use a nutrient solution containing sodium nitrate (NaNO₃), and the content of sodium nitrate with respect to the total mass of the nutrient solution is preferably 0.002% by mass to 0.5% by mass, more preferably 0.007% by mass to 0.3% by mass, and still more preferably 0.009% by mass to 0.1% by mass.

Since the preferred numerical ranges of the dissolved oxygen concentration and the pH of the nutrient solution used in the cultivation step are the same as those of the nutrient solution used in seedling raising, the description thereof will be omitted here.

In the cultivation step, the temperature conditions can be adjusted. The temperature conditions in the cultivation step can be adjusted to, for example, two or more temperature conditions of the light period temperature and the dark period temperature.

From the viewpoint of improving the lycopene content in tomatoes, the upper limit of the light period temperature is preferably 29°C or lower, more preferably 28.5°C or lower, and still more preferably 28°C or lower.

From the viewpoint of shortening the period until tomato harvesting of the tomato plant, the lower limit of the light period temperature is preferably 15°C or higher, more preferably 20°C or higher, and still more preferably 25°C or higher.

From the viewpoint of improving the lycopene content in tomatoes, the upper limit of the dark period temperature is preferably 25°C or lower, more preferably 23°C or lower, and still more preferably 22°C or lower.

From the viewpoint of shortening the period until tomato harvesting of the tomato plant, the lower limit of the light period temperature is preferably 10°C or higher, more preferably 13°C or higher, and still more preferably 15°C or higher.

The light source that can be used in the cultivation step is the same as that in the seedling raising step, and thus the description thereof will be omitted here.

From the viewpoint of shortening the period until tomato harvesting of the tomato plant, the relative humidity in the cultivation step is preferably controlled within a range of 50% to 80% and more preferably controlled within a range of 55% to 77%.

From the viewpoint of shortening the period until tomato harvesting of the tomato plant, the intensity of the artificial light irradiated onto the tomato plant in the cultivation step is preferably 80 µmol/m²/s to 500 µmol/m²/s and more preferably 100 µmol/m²/s to 300 µmol/m²/s.

The irradiation with artificial light may be performed from the upper surface direction of the tomato plant or from the side surface direction thereof, but from the viewpoints of cultivation efficiency, space utilization efficiency, and the like, it is preferable to perform the irradiation from the side surface direction.

In addition, the irradiation with artificial light may be performed from both the side surface direction and the upper surface direction of the tomato plant.

From the viewpoint of shortening the period until tomato harvesting of the tomato plant, in the cultivation step, the carbon dioxide concentration in the environment is preferably 300 ppm to 2,000 ppm and more preferably 400 ppm to 1,500 ppm.

The period of the cultivation step after planting is not particularly limited, but in a case of three-cluster cultivation such as low-node dense planting, the period is preferably 70 days to 130 days, more preferably 80 days to 120 days, still more preferably 80 days to 110 days, and particularly preferably 90 days to 110 days.

In the period of the cultivation step, it is preferable to perform replacement of the nutrient solution, addition of the liquid fertilizer, and the like as necessary, depending on the EC value, pH, and the like of the nutrient solution.

In the cultivation step, it is preferable to remove the leaves below the fruit cluster level in which harvesting has been completed. By removing the leaves below the fruit cluster level in which harvesting has been completed, the cultivation efficiency can be improved.

The lateral buds of the tomato plant body may be appropriately removed (lateral bud picking).

### (Germination step)

The cultivation method for a tomato plant body of the present disclosure can include a germination step. In the germination step, germination of tomato seeds used in the seedling raising step is performed.

A germination method is not particularly limited, and the germination can be performed by a known method in the related art. For example, the germination can be performed by sowing seeds of a tomato on the above-described support sufficiently moistened with water and storing in a dark place.

In addition, it is preferable to select tomato seeds having a similar degree of growth from among the tomato seeds in which germination is confirmed and to carry out raising seedlings. Accordingly, the harvesting time of the fruit can be matched, and the cultivation efficiency can be improved.

The temperature in the germination step varies depending on the item and variety of the fruit vegetable plant to be used, but in a case of commercially available seeds, these are generally disclosed as the germination temperature. In addition, in a case where the germination temperature is unknown, it can be experimentally confirmed.

Depending on the item and variety of the fruit vegetable plant to be used, it may be necessary to perform a treatment such as dormancy breaking during germination. In the germination step, there are those that require light of a specific wavelength, those that require to be under darkness, and those germinate in any of the cases. The conditions for the germination can also be known from the data of the commercially available seeds or experimental confirmation, as in the case of the germination temperature.

The relative humidity in the germination step is preferably 70% to 100% and particularly preferably 80% to 95%. By setting the relative humidity in the germination step to be in the above-described range, it is possible to prevent drying of a plant body in the germination period and to make the growth good.

The period required for the germination step is not determined to be constant, but the period is preferably a period until rooting and subsequent hypocotyl elongation start, generally about several days to one week. By applying this period to the germination step, the roots can be sufficiently grown, and at the same time, it is possible to avoid excessive hypocotyl elongation. Therefore, the growth of seedlings in the subsequent seedling raising step is made good and a period until flowering can be shortened, which is preferable.

From the viewpoint of nutritional value, the lycopene content in the tomatoes harvested by the cultivation method for a tomato plant body of the present disclosure is preferably 12 mg/100 g or more, more preferably 12 mg/100 g or more and less than 30 mg/100 g, still more preferably 13 mg/100 g to 25 mg/100 g, particularly preferably 13 mg/100 g to 23 mg/100 g, and most preferably 13 mg/100 g to 20 mg/100 g.

The proline content of the tomato harvested by the cultivation method for a tomato plant body of the present disclosure is preferably 10 mg/100 g or more and less than 300 mg/100 g.

From the viewpoint of sweetness and nutritional value of a tomato, the proline content of the tomato is preferably 13 mg/100 g or more, more preferably 15 mg/100 g or more, and still more preferably 20 mg/100 g or more.

The upper limit of the proline content may be 200 mg/100 g or less or may be 100 mg/100 g or less.

The arginine content of the tomato harvested by the cultivation method for a tomato plant body of the present disclosure is preferably 10 mg/100 g or more and less than 100 mg/100 g, more preferably 15 mg/100 g to 95 mg/100 g, and still more preferably 18 mg/100 g to 85 mg/100 g.

### EXAMPLES

Hereinafter, the above-described embodiment will be specifically described with reference to Examples, but the above-described embodiment is not limited to these Examples.

In the following examples, the temperature in each step was controlled by a light period temperature and a dark period temperature.

In the following examples, the "light period temperature" is described as "light period", and the "dark period temperature" is described as "dark period". In addition, the cycle of the "light period" and the "dark period" controlled by the light source is referred to as a "light-dark cycle".

The following examples and comparative examples are common at least under the following conditions.
· Variety: Momotaro York (TAKII & Co., Ltd.)
· Planting time: early September
· Number of clusters in cultivation: three-cluster cultivation
· Number of days of cultivation: 120 days after seeding
· Cultivation method: hydroponic cultivation
· Support after planting: rock wool
· Number of plants planted: 2 plants

The details of the nutrient solutions A to E used in Examples are shown in Table 1.

In Table 1, "1N hydrochloric acid" means 1 mol/L hydrochloric acid. In addition, "Trace element M No.5" is GFM hydroponic fertilizer (containing components: manganese (MnO) of 3.80%, boron (B₂O₅) of 5.80%, iron (Fe) of 9.10%, copper (Cu) of 0.35%, zinc (Zn) of 0.7%, molybdenum (Mo) of 0.17%) provided by M Hydroponic Research Co., Ltd.

In addition, all of the evaluation results described later are average values of all fruits harvested under each cultivation condition.

### <Example 1>

### -Seedling raising step-

Tomato seeds (variety: Momotaro York (registered trademark)) were sown on a 5 cm square urethane sponge (manufactured by Kyowa Limited, yellow medium for fruit and vegetable) sufficiently containing pure water, and stored in the darkness under the conditions of a temperature of 28°C and a relative humidity of 70% for three days.

After confirming the germination of the tomato seeds, the seedlings were raised for 17 days using a Deep Flow Technique hydroponic system cultivation. As the liquid fertilizer, Hyponica liquid fertilizer (manufactured by Kyowa Co., Ltd.) was used by being diluted with pure water to 500 times.

As a light source in the seedling raising period, LED (CIVILIGHT, DPT2RB120Q33) manufactured by SHOWA DENKO K.K. was used, and the urethane sponge was irradiated with light from above such that the intensity of light at the upper surface of the urethane sponge was 250 µmol/m²/s.Other environmental conditions during seedling raising were set as follows.

### (Seedling raising environment conditions)

· Light-dark cycle: (light period) 16 hours/(dark period) 8 hours
· Temperature: (light period) 28°C/(dark period) 19°C
· Humidity: 60%
· CO₂ concentration: 1,000 ppm
· Distance between strains: 15 cm

### -Cultivation step-

The tomato plant seedlings (2 plants) obtained by the above-described seedling raising were planted in a completely closed type artificial light plant factory and grown under the following Deep Flow Technique hydroponic system cultivation conditions.

In the growth period, according to the conventional method, the pruning (such as side shoot cutting, leaf plucking, and the like) and the training were performed in a single-stemmed manner, and after three flower clusters (first to third flower clusters) set on the main branch, it was confirmed that two main leaves were developed on an upper side of the third flower cluster, and then pinching was performed while leaving the main leaves. Each fruit cluster was thinned such that the number of fruit setting per cluster was 4, the tomato fruits born up to the third flower cluster were harvested, and cultivation was completed.

### (Cultivation conditions)

· Light-dark cycle: (light period) 16 hours/(dark period) 8 hours
· Intensity of light: 250 µmol/m²/s
· Temperature: (light period) 28°C/(dark period) 19°C
· Humidity: 60%
· CO₂ concentration: 1,000 ppm
· Nutrient solution: the nutrient solution A was supplied immediately after planting, the nutrient solution was changed to the nutrient solution B at the time of beginning of flowering of the first fruit cluster, and the nutrient solution was further changed to the nutrient solution C at the time of beginning of flowering of the second fruit cluster. Then, the nutrient solution C was used.

### <Example 2>

A tomato plant was cultivated in the same manner as in Example 1, except that as the nutrient solution used in the cultivation step, the nutrient solution A was supplied immediately after planting, the nutrient solution was changed to the nutrient solution B at the time of beginning of flowering of the first fruit cluster, and the nutrient solution was further changed to the nutrient solution D at the time of beginning of flowering of the second fruit cluster.

### <Example 3>

A tomato plant was cultivated in the same manner as in Example 1, except that as the nutrient solution used in the cultivation step, the nutrient solution A was supplied immediately after planting, the nutrient solution was changed to the nutrient solution B at the time of beginning of flowering of the first fruit cluster, the nutrient solution was further changed to the nutrient solution C at the time of beginning of flowering of the second fruit cluster, then the nutrient solution C was changed to the nutrient solution E immediately after pinching.

### <Example 4>

A tomato plant was cultivated in the same manner as in Example 1, except that as the nutrient solution used in the cultivation step, the nutrient solution A was supplied immediately after planting, the nutrient solution was changed to the nutrient solution B at the time of beginning of flowering of the first fruit cluster, and the nutrient solution was further changed to the nutrient solution E.

### <Comparative Example 1>

A tomato plant was cultivated in the same manner as in Example 1, except that as the nutrient solution used in the cultivation step, immediately after planting, a nutrient solution a obtained by diluting Hyponica liquid fertilizer (manufactured by Kyowa Co., Ltd.) with pure water to 500 times was used, and the nutrient solution a was changed to a nutrient solution b obtained by diluting the Hyponica liquid fertilizer (manufactured by Kyowa Co., Ltd.) with pure water to 170 times at the time of beginning of flowering of the second fruit cluster.

The nitrogen content in the nutrient solution a was 0.01% by mass, and the nitrogen content in the nutrient solution b was 0.02% by mass.

### <Comparative Example 2>

Two seedlings were planted in a vinyl house in Kanagawa Prefecture and grown in a cultivation step under the following conditions.

### (conditions)

· Light-dark cycle and intensity of light: under natural conditions, only sunlight is used without providing the light supplement.
· Temperature: (during the day) the temperature is controlled in a range of 25°C to 35°C by appropriately using sunlight shielding and cold air, (at night) the temperature is controlled in a range of 19°C to 25°C by appropriately using cold air.
· Humidity: 60 %RH
· CO₂ application: none
· Nutrient solution: immediately after planting, a nutrient solution a obtained by diluting Hyponica liquid fertilizer (manufactured by Kyowa Co., Ltd.) with pure water to 500 times was used, and the nutrient solution a was changed to a nutrient solution b obtained by diluting the Hyponica liquid fertilizer (manufactured by Kyowa Co., Ltd.) with pure water to 170 times at the time of beginning of flowering of the second fruit cluster.

### <Comparative Example 3>

A tomato plant was cultivated in the same manner as in Example 1, except that the temperature in the light period was set to 30°C and the temperature in the dark period was set to 25°C as the cultivation conditions in the cultivation step.

### <<Measurement of contents of lycopene, proline, and arginine>>

The lycopene content in the tomatoes harvested in the above-described examples and comparative examples was measured by high performance liquid chromatography (HPLC). The results are shown in Tables 3 to 4.

The proline content of the tomatoes harvested in the above-described examples and comparative examples was measured by high performance liquid chromatography (HPLC). The results are shown in Tables 3 to 4.

The arginine content of the tomatoes harvested in the above-described examples and comparative examples was measured by high performance liquid chromatography (HPLC). The results are shown in Tables 3 to 4.

**[Table 1]**

| | Content of each component in nutrient solution (g) *50 L solution preparation | | | | | | | | | | | |
|---|---|---|---|---|---|---|---|---|---|---|---|---|
| | NaNO₃ | NH₄Cl | K₂SO₄ | KH₂PO₄ | CaCl₂ | MgCl₂·6H₂O | KCl | Trace element M No.5 | NaCl | IN hydrochloric acid | Na₂SiO₃ | H₂O |
| Nutrient solution A | 30 | 1.3 | 7 | 7 | 11 | 7 | 7 | 4 | 0 | 0 | 0 | 50,000 |
| Nutrient solution B | 30 | 1.3 | 7 | 7 | 11 | 7 | 7 | 4 | 0 | 213 | 37 | 50,000 |
| Nutrient solution C | 30 | 1.3 | 7 | 7 | 11 | 7 | 7 | 4 | 40 | 213 | 37 | 50,000 |
| Nutrient solution D | 30 | 1.3 | 7 | 7 | 11 | 7 | 7 | 4 | 162 | 213 | 37 | 50,000 |
| Nutrient solution E | 7 | 0.3 | 7 | 7 | 11 | 7 | 7 | 4 | 0 | 213 | 37 | 50,000 |

**[Table 2]**

| | EC value after solution preparation | Nitrogen content (% by mass) | NaCl content (% by mass) |
|---|---|---|---|
| Nutrient solution A | 2.2 | 0.01 | 0 |
| Nutrient solution B | 2.6 | 0.01 | 0 |
| Nutrient solution C | 5 | 0.01 | 0.08 |
| Nutrient solution D | 8 | 0.01 | 0.32 |
| Nutrient solution E | 2 | 0.003 | 0 |
| Nutrient solution a (Hyponica liquid fertilizer diluted 500 times) | 1.2 | 0.01 | - |
| Nutrient solution b (Hyponica liquid fertilizer diluted 170 times) | 3.8 | 0.02 | - |
| Trace element M No.5 | - | 0.00 | - |

**[Table 3]**

| | | Example 1 | Example 2 | Example 3 | Comparative Example 1 | Comparative Example 2 | Comparative Example 3 |
|---|---|---|---|---|---|---|---|
| | Type of nutrient solution | A→B→C | A→B→D | A→B→C→E | a→b | a→b | A→B→C |
| Evaluation results (*average value of all fruits of two plants) | Lycopene (mg/100 g) | 14 | 14 | 14 | 14 | 5 | 5 |
| | Proline (mg/100 g) | 17 | 40 | 15 | 2 | 17 | 17 |
| | Arginine (mg/100 g) | 20 | 20 | 80 | 20 | 20 | 20 |

**[Table 4]**

| | | Example 4 |
|---|---|---|
| | Type of nutrient solution | A→B→E |
| Evaluation results (*average value of all fruits of two plants) | Lycopene (mg/100 g) | 14 |
| | Proline (mg/100 g) | 8 |
| | Arginine (mg/100 g) | 80 |

As shown in Table 3, in Examples 1 to 3, artificial light was irradiated in a temperature environment of less than 30°C and a nutrient solution containing sodium chloride was used in a period at least from a time point of beginning of flowering of the second fruit cluster to before pinching, whereby tomatoes having a higher lycopene content than that of Comparative Examples and having high contents of proline and arginine could be harvested.

In addition, as shown in Table 4, the tomato fruit harvested in Example 4 had a lycopene content of 12 mg/100 g or more and less than 30 mg/100 g, and an arginine content of 10 mg/100 g or more and less than 100 mg/100 g.

The disclosure of JP2023-027720 filed on February 24, 2023 is incorporated herein by reference.

All publications, patent applications, and technical standards mentioned in the present disclosure are herein incorporated by reference to the same extent as if each individual publication, patent application, and technical standard were specifically and individually indicated to be incorporated by reference.

## Claims

1. A tomato in which a lycopene content is 12 mg/100 g or more and less than 30 mg/100 g, and a proline content is 10 mg/100 g or more and less than 300 mg/100 g.

2. A tomato in which a lycopene content is 12 mg/100 g or more and less than 30 mg/100 g, and an arginine content is 10 mg/100 g or more and less than 100 mg/100 g.

3. A tomato in which a lycopene content is 12 mg/100 g or more and less than 30 mg/100 g, a proline content is 10 mg/100 g or more and less than 300 mg/100 g, and an arginine content is 10 mg/100 g or more and less than 100 mg/100 g.

4. A cultivation method for a tomato plant body, comprising:
cultivating a tomato plant body by irradiation with artificial light in a temperature environment of lower than 30°C, and
wherein the cultivation is performed by using a nutrient solution containing sodium chloride in a period at least from a time point of beginning of flowering of a second fruit cluster to before pinching.

5. The cultivation method for a tomato plant body according to claim 4,
wherein a content of the sodium chloride with respect to a total mass of the nutrient solution is 0.01% by mass to 1% by mass.

6. The cultivation method for a tomato plant body according to claim 4 or 5,
wherein a lycopene content in a tomato harvested is 12 mg/100 g or more.

7. The cultivation method for a tomato plant body according to claim 4 or 5,
wherein the cultivation is performed by using a nutrient solution that does not contain nitrogen or that contains nitrogen and has a content of the nitrogen of 1% by mass or less with respect to a total mass of the nutrient solution, in a period after fruit setting.
